# EUROPÄISCHE PATENTANMELDUNG

(11) **EP 1 122 846 A2**
(43) Veröffentlichungstag der Anmeldung: **08.08.2001**
(21) Anmeldenummer: 01101772.0
(22) Anmeldetag: 26.01.2001
(51) Int. Cl.: H02G 3/38

(54) **Versorgungskanal für Wände mit Dampfsperre**

(30) Priorität: 07.02.2000 DE 10005155
(71) Anmelder: Ökologische Bausysteme B.I. Moll GmbH & Co. KG., 68723 Schwetzingen (DE)
(72) Erfinder: Moll, Lothar, D-68723 Schwetzingen (DE)
(74) Vertreter: Sartorius, Peter, Dipl.-Ing.

(57) **Zusammenfassung**

**Die Erfindung bezieht sich auf** einen Kabelkanal 1 zum Befestigen und/oder Aufnehmen von Kabel- und/oder Rohrelementen 13 an Wänden 2 von Gebäuden, wobei der Kabelkanal 1 aus einem oder mehreren Teilstücken 9 mit mindestens einer Dichtfläche 11 und/oder Klebefläche 12 zur Wand oder Dampfsperre 17 hin besteht, und der Kabelkanal 1 diffusionshemmend ausgebildet und über die Klebeverbindung 12 an die Wand 2 oder Dampfsperre 17 oder an das nächste Teilstück 9 anbringbar bzw. fixierbar ist.

## Beschreibung

**Die Erfindung bezieht sich auf** einen Kabelkanal zum Befestigen und/oder Aufnehmen von Kabel- und/oder Rohrelementen an Wänden von Gebäuden.

**Es ist bereits** ein Kabelkanal für Rohre, Kabel u. ä. bekannt, der im Bereich von Wänden angeordnet bzw. an diesen verschraubt ist. Dieser auch als Kabelschacht bezeichnete Kabelkanal dient dazu, Kabel und Rohre aller Art aufzunehmen und diese auf den jeweils vorgesehenen Wegen oder Bahnen an einer Fläche zu fixieren. Bei Verwendung eines solchen Kabelkanals können nachträglich jederzeit weitere Rohr- und Kabelelemente hinzugefügt oder entfernt werden.

Diese bekannten Kabelkanäle sind meist aus Gewichtsgründen und aus Gründen der Materialersparnis perforiert ausgebildet. Sie werden an der jeweiligen Wand im Rauminneren über Schraubverbindungen angebracht. Grundvoraussetzung hierfür ist, daß die jeweilige Wand zum einen ausreichende Festigkeiten aufweist und zum anderen auch mit Schraub- oder Dübellöchern versehen werden kann.

Im Holzbau ist es üblich, die Hohlwände mit einer Dampfsperre auszustatten, um Feuchtigkeit im Rahmenelement zu vermeiden. Da sämtliche Rohr- und Kabelelemente im Wandinneren verlaufen, sind zum Aus- bzw. Eintritt der jeweiligen Kabel- oder Rohrelemente aus der Innenwand oder in die Innenwand hinein Löcher vorgesehen. Diese Löcher bilden aber hinsichtlich der Dampfdurchlässigkeit ein Leck, so daß handelsübliche Kabelkanäle hierbei zwar verwendet werden könnten, jedoch keine Dampfsperre zwischen Kabelkanal bzw. Innenraum und Rahmenelement bilden. Stattdessen wird eine zusätzliche Innenwand angebracht, hinter der die Kabel- und Rohrelemente angeordnet sind. Ein Anbohren der eigentlichen mit der Dampfsperre versehenen Wand wird somit vermieden. Dieses Verfahren ist aber sehr aufwendig und teuer.

**Der Erfindung liegt die Aufgabe zugrunde,** einen Versorgungskanal derart auszubilden und anzuordnen, daß ein Leck hinsichtlich " der Dampfdurchlässigkeit aufgrund von Montagelöchern in der Dampfsperre vermieden wird.

**Gelöst wird die Aufgabe erfindungsgemäß dadurch, daß** der Kabelkanal aus einem oder mehreren Teilstücken mit mindestens einer Dichtfläche und/oder Klebefläche zur Wand oder Dampfsperre hin besteht, wobei der Kabelkanal diffusionshemmend ausgebildet und über die Klebeverbindung an die Wand oder Dampfsperre oder an das nächste Teilstück anbringbar und fixierbar ist. Hierdurch wird erreicht, daß durch Montageöffnungen in der Innenseite der Hohlraumwand bzw. der Dampfsperre Luftkonvektion zwischen Hohlraumwand und Raumluft verhindert wird. Die entstehenden Undichtigkeiten der Innenseite bzw. der Dampfsperre werden durch die derart ausgebildeten Kabelkanäle wieder geschlossen und die Hohlraumwand ist zum Gebäudeinnenraum hin abgeschottet.

Vorteilhaft ist es hierzu, daß die einzelnen Teilstücke auf einer inneren, diffusionsdichten Seite im Inneren einer Hohlraumwand oder Holzbauwand angeordnet sind. Somit sind die Kabelkanäle in die Hohlraumwand integriert und ergänzen den diffusionsdichten Teil der Hohlraumwand.

Eine zusätzliche Möglichkeit ist gemäß einer Weiterbildung, daß die einzelnen Teilstücke eine Plazierungsreferenz oder eine Ausrichtungshilfe aufweisen. Hiermit ist eine Referenzangabe bzw. Einbauangabe möglich, die es zuläßt, jederzeit die in der Hohlraumwand integrierten Kabelkanäle aufzufinden und diese nachträglich zu verwenden. Ein für jedes Ausführungsbeispiel festgelegtes Einbaumaß, das sich auf das Referenzmaß bezieht, gewährleistet ein späteres Auffinden bzw. das fehlerfreie Erstellen weiterer Montagelöcher.

Ferner ist es vorteilhaft, daß der Kabelkanal Verbindungsstücke aufweist und die einzelnen Teilstücke und/oder Verbindungsstücke aneinander anschließbar sind, wobei die Verbindungsstücke eine gerade Form, eine T-Form oder eine L-Form aufweisen. Damit ist ein beliebiges Zusammensetzen bzw. Erstellen jeder Kabelkanalform möglich. Bestehende Grundformen können jederzeit miteinander verbunden und kombiniert werden.

Gemäß einer bevorzugten Ausführungsform der erfindungsgemäßen Lösung ist schließlich vorgesehen, daß die einzelnen Teilstücke und/oder Verbindungsstücke aus biegsamem, flexiblem Material gebildet sowie auf- und abrollbar sind. Somit kann der Kabelkanal endlos hergestellt werden und steht im aufgerollten Zustand in jeder Länge zur Verfügung.

Von besonderer Bedeutung ist für die vorliegende Erfindung auch, daß die Verbindungsstücke und/oder die Teilstücke aus diffusionshemmendem Material wie Karton, Polystyrol oder PVC gebildet sind. Hierdurch kann auf kostengünstige Weise ein Endloskanal gefertigt werden.

Im Zusammenhang mit der erfindungsgemäßen Ausbildung und Anordnung ist es von Vorteil, daß die einzelnen Teilstücke und/oder die Verbindungsstücke über eine Klebeverbindung aneinander ansetzbar sind. Die Klebeverbindung macht ein schnelles und einfaches Ansetzen der einzelnen Teilstücke möglich. Unter Verwendung eines Klebestreifens werden Undichtigkeiten somit jederzeit vermieden.

Vorteilhaft ist es ferner, daß die einzelnen Teilstücke und/oder Verbindungsstücke eine zusätzliche dampfsperrende Beschichtung aufweisen. Es kann daher in vorteilhafter Weise jedes Grundmaterial verwendet werden, selbst wenn es nicht diffusionsdicht oder zu diffusionsoffen ausgebildet ist. Die zusätzliche Beschichtung gewährleistet in jedem Fall eine sehr gute Diffusionsdichtheit.

Außerdem ist es vorteilhaft, daß die einzelnen Teilstücke und/oder Verbindungsstücke über eine Klebeverbindung an die Wand anbringbar und fixierbar sind, wobei die Klebeverbindung als vorgefertigter Klebestreifen ausgebildet ist. Die Klebeverbindung gewährleistet eine schnelle und einfache Montage. Sie gewährleistet ebenfalls die Dichtheit zwischen Kabelkanal und Wandfläche. Hierzu ist es von Vorteil, daß die Klebeverbindung oder der Klebestreifen auf einer der Dichtfläche oder Anlegefläche gegenüberliegenden oder abgewandten Seite angeordnet ist und seitlich über die Dichtfläche hinausragt. Der an die Dampfbremse angelegte Kabelkanal wird mittels des überstehenden Klebestreifens mit der Dampfbremse verklebt.

Ferner ist es vorteilhaft, daß die einzelnen Teilstücke und/oder Verbindungsstücke einen Faltbalg aufweisen und/oder flexibel ausgebildet sind. Der Kabelkanal kann sich somit an das vorhandene Dämmaterial anpassen, d. h. er wird entsprechend dem Volumen seiner aufgenommenen Kabel- und Rohrelemente bis auf ein Minimum zusammengedrückt. Auch beim Einführen der Kabel- und Rohrelemente erweist sich die Flexibilität als äußerst wichtig. Ein Ausbeulen bzw. Nachgeben des fixierten Kabelkanals gewährleistet die Dichtheit der Klebeverbindung zwischen Wand und Kabelkanal, da dieser im Belastungsfall eben nicht von der Wand abhebt bzw. die Haltekraft der Klebeverbindung nicht beansprucht.

Hierzu ist es von Vorteil, daß die einzelnen Teilstücke und/oder Verbindungsstücke durchstechfest und reißfest ausgebildet sind. Bei der Montage der Kabel- und Rohrelemente bzw. beim Einführen dieser kann somit ein Aufreißen oder Durchstechen des Kabelkanals ausgeschlossen werden.

Schließlich ist es von Vorteil, daß die einzelnen Teilstücke und/oder Verbindungsstücke aus steifem Material wie Preßspan oder Kunststoff gebildet sind. In speziellen Anwendungsfällen ist es vorteilhaft, eine steife Ausbildung des Kabelkanals im Bereich anderer Montageteile vorzusehen.

Vorteilhaft ist es hierzu auch, daß die Teilstücke und/oder die Verbindungsstücke derart ausgebildet sind, daß eine einschalige Ausbildung der Hohlraumwand möglich ist. Somit ist es nicht notwendig, eine zweite Innenwand zu installieren, um die Dichtheit zwischen Hohlraumwand und Rauminnerem zu gewährleisten.

Letztlich ist es von Vorteil, daß der Kabelkanal aus flachem, flexiblem, diffusionshemmendem Laminat oder Material gebildet ist und einen oder mehrere Falze oder Faltbalge aufweist, mittels derer das Material zu einem Kabelkanal formbar ist. Die Herstellung und Weiterverwendung eines derart ausgebildeten Kabelkanals ist äußerst kostengünstig und einfach. Zudem bietet er aufgrund seiner Flexibilität eine ausreichende Sicherheit gegen Wasserdampfdiffusion in das Innere der Hohlraumwand.

Ferner ist es vorteilhaft, daß die Klebefläche des als Ganzes diffusionshemmend ausgebildeten Kabelkanals als Dichtfläche zur Wand oder einer Dampfsperre hin ausgebildet ist, wobei der Kabelkanal über die Klebeverbindung an die Wand oder Dampfsperre oder Dampfbremse oder an das nächste Teilstück anbringbar und fixierbar ist.

**Weitere Vorteile und Einzelheiten der Erfindung sind in den Patentansprüchen** und in der Beschreibung erläutert und in den Figuren dargestellt. Es zeigt:
- Figur 1: eine Hohlraumwand in der Ansicht von vorne, entlang der Linie A-A mit verschiedenen Kabelkanälen,
- Figur 2: eine Schnittdarstellung der Hohlraumwand entlang der Linie B-B gemäß Figur 1,
- Figur 3: eine perspektivische Ansicht eines Teilstücks mit Klebeverbindungen und Faltbalg,
- Figur 4: eine Schnittdarstellung des Kabelkanals mit äußerem Klebestreifen.

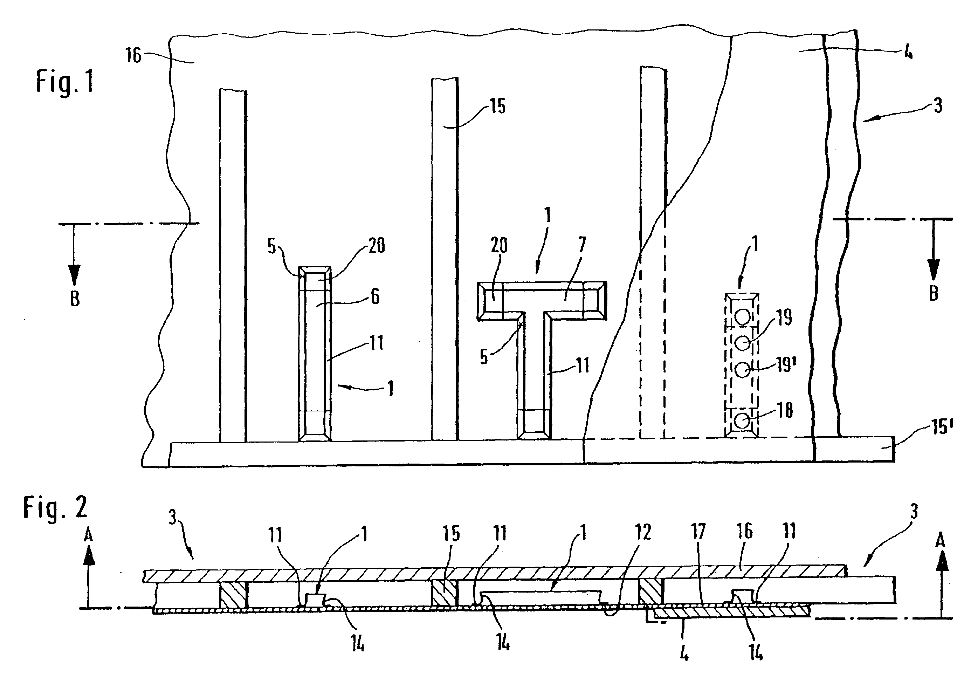

Figur 1 zeigt eine Hohlraumwand 3 für Gebäude mit Holzrahmenbau. Sie besteht im wesentlichen aus mehreren Pfosten 15 und Bodenplanken 15', die auf beiden Seiten mit Wandteilen wie eine Innenseite 4 und eine Außenseite 16 beplankt sind. Die Innenseite 4 ist hierbei meist diffusionsdicht und die Außenseite 16 diffusionsoffen ausgebildet.

Der linke Teil der Figur 2 zeigt die Hohlraumwand 3 ohne Innenseite 4 und ohne Dampfsperre 17. Im Bereich zwischen den Pfosten 15 sind Kabelkanäle 1 an der in der Zeichnung teilweise dargestellten Innenwand bzw. Dampfsperre angeordnet. Der linke Kabelkanal 1 ist gerade und der rechte Kabelkanal T-förmig ausgebildet.

Der rechte Teil der Figur 2 zeigt die Hohlraumwand 3 mit der Innenseite 4 und der Dampfsperre 17. Der Kabelkanal 1 ist nicht sichtbar. Die Innenseite 4 weist im Bereich des Kabelkanals 1 eine Eintrittsöffnung 18 sowie mehrere Austrittsöffnungen 19, 19' auf.

Die Kabelkanäle 1 bzw. die den Kabelkanal bildenden Teilstücke weisen mindestens eine Dichtfläche 11 auf und sind mit dieser gegen die Innenseite 4 der Hohlraumwand 3 gebracht bzw. über eine Klebeverbindung 12 mit der Innenseite 4 verbunden. Die Kabelkanäle 1 sind zur Plazierung mit einer Plazierungshilfe 5 ausgestattet, welche die Referenz zu einer nächsten Ecke oder zum nächsten Pfosten 15 o. ä. darstellt.

Verschiedene in der Zeichnung nicht dargestellte Kabel- und Leitungselemente können somit von einer Bodenseite her durch die Eintrittsöffnung 18 in der Innenwand 4 in den Kabelkanal 1 eingebracht und aus der Austrittsöffnung 19 herausgeführt werden. Die durch die Eintrittsöffnung 18 bzw. die Austrittsöffnung 19 oder durch andere Elemente wie Schalter o. ä. erzeugten Undichtigkeiten der Innenwand 4 bzw. der Dampfsperre 17 und der damit auftretende Luftaustausch zwischen der Raumluft und der Hohlraumwand 3 kann somit verhindert werden.

In Figur 2 ist dargestellt, wie die Kabelkanäle 1 mit ihren Dichtflächen 11 an der Dampfsperre 17 bzw. Innenwand 4 anliegen. Das in die Hohlraumwand 3 eingebrachte, nicht dargestellte Dämmaterial umgibt die Kabelkanäle bzw. diese formen das umgebende Dämmaterial entsprechend ihrer Außenkontur.

Der in Figur 2 dargestellte Kabelkanal ist entsprechend seiner T-Form gefertigt und weist an seinen stirnseitigen Enden anschließende Endteile 20 auf.

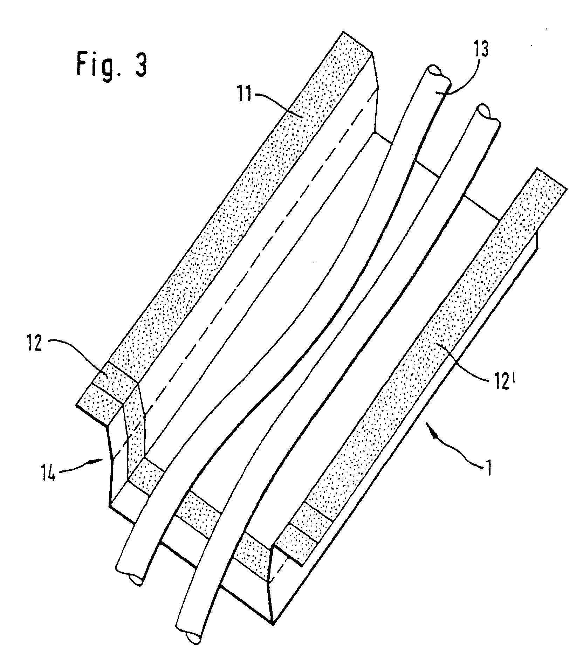

Figur 3 zeigt den Kabelkanal 1 von hinten. Er ist aus einem diffusionshemmenden bzw. diffusionsdichten, flexiblen und reißfesten Material gebildet. Mit der Dichtfläche 11 und einem darauf vorgesehenen Klebestreifen 12' wird er an die jeweilige Stelle der Dampfsperre 17 geklebt. Je nach Anwendungsfall werden mehrere Teilstücke des Kabelkanals 1 aneinander angefügt. Daher ist ein weiterer Klebestreifen 12 am Kabelkanal bzw. dessen stirnseitigem Ende vorgesehen. Er dient zur Verbindung der einzelnen Teilstücke untereinander, so daß zwischen den Teilstücken bzw. im Bereich der Verbindung kein Luftaustausch durch Konvektion auftreten kann.

Der in Figur 3 dargestellte Kabelkanal 1 ist im Querschnitt rechteckförmig ausgebildet und weist eine Deckfläche, zwei Seitenflächen sowie jeweils eine daran anschließende Dichtfläche auf. Die Seitenfläche ist faltbar ausgebildet, d. h. der Kabelkanal 1 weist an diesen Seitenflächen je einen Faltbalg 14 auf, der ihm eine ausreichende Flexibilität in Raumrichtung gewährleistet. Außerdem kann der Kabelkanal 1 im gefalteten Zustand aufgerollt bzw. als endloser Kabelkanal 1 gefertigt werden. Die Dichtflächen 11 weisen mit den Seitenflächen in etwa einen Winkel von 90 auf bzw. sind in diesem Winkel abgeknickt. Sie weisen somit in Richtung der zu dichtenden Wand bzw. Dampfsperre 17 und werden mittels des aufgebrachten Klebestreifens dort befestigt.

Am Ende jedes Kabelkanals 1 bzw. jedes Teilstücks ist ein Endteil 20 vorgesehen, so daß hier auch ein konvektionsfreier Abschluß gewährleistet wird, da der endlos ausgebildete Kabelkanal keinen stirnseitigen Abschluß bietet.

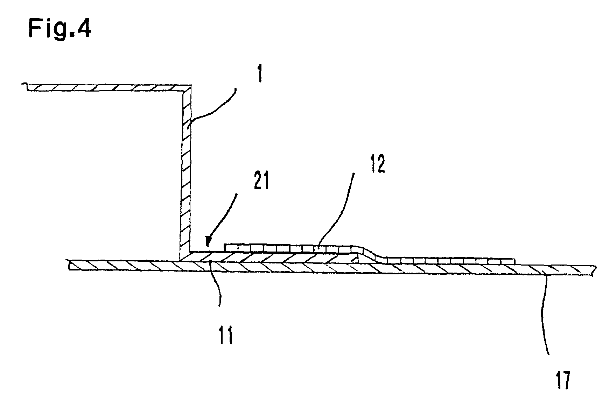

Figur 4 zeigt den an die Dampfbremse 17 angelegten Kabelkanal 1, wobei der Klebestreifen 12 auf einer der Dichtfläche 11 abgewandten Oberseite 21 angeordnet ist und seitlich herausragt. Der Klebestreifen 12 verbindet somit im aufgeklebten Zustand die Oberseite 21 mit dem an die Dichtfläche 11 angrenzenden Bereich der Dampfbremse 17.

### Bezugszeichenliste

- 1: Kabelkanal
- 2: Gebäudewand
- 3: Hohlraumwand
- 4: Innenseite
- 5: Plazierungsreferenz, Plazierungshilfe
- 6: gerade Form
- 7: T-Form
- 8: L-Form
- 9: Teilstück
- 10: Verbindungsstück
- 11: Dichtfläche
- 12: Klebeverbindung, Klebestreifen
- 12': Klebeverbindung, Klebestreifen
- 13: Kabel- und/oder Rohrelement
- 14: Faltbalg, Falz
- 15: Pfosten
- 15': Bodenplanke
- 16: Außenseite
- 17: Dampfsperre
- 18: Eintrittsöffnung
- 19: Austrittsöffnung
- 19': Austrittsöffnung
- 20: Endteil
- 21: Seite, Oberseite

## Patentansprüche

1. Kabelkanal (1) zum Befestigen und/oder Aufnehmen von Kabel- und/oder Rohrelementen (13) an Wänden (2) von Gebäuden, **dadurch gekennzeichnet, daß** der Kabelkanal (1) aus einem oder mehreren Teilstücken (9) mit mindestens einer Dichtfläche (11) und/oder Klebefläche (12) zur Wand oder Dampfsperre (17) hin besteht, wobei der Kabelkanal (1) diffusionshemmend ausgebildet und über die Klebeverbindung (12) an die Wand (2) oder Dampfsperre (17) oder an das nächste Teilstück (9) anbringbar und fixierbar ist.

2. Kabelkanal nach Anspruch 1, **dadurch gekennzeichnet, daß** die einzelnen Teilstücke (9) auf einer inneren, diffusionsdichten Seite (4) im Inneren einer Hohlraumwand (3) oder Holzbauwand angeordnet sind.

3. Kabelkanal nach einem der vorhergehenden Ansprüche, **dadurch gekennzeichnet, daß** die einzelnen Teilstücke (9) eine Plazierungsreferenz oder eine Ausrichtungshilfe (5) aufweisen.

4. Kabelkanal nach einem der vorhergehenden Ansprüche, **dadurch gekennzeichnet, daß** der Kabelkanal (1) Verbindungsstücke (10) aufweist und die einzelnen Teilstücke (9) und/oder Verbindungsstücke (10) aneinander anschließbar sind.

5. Kabelkanal nach einem der vorhergehenden Ansprüche, **dadurch gekennzeichnet, daß** die Verbindungsstücke (10) eine gerade Form (6) oder eine T-Form (7) oder eine L-Form (8) aufweisen.

6. Kabelkanal nach einem der vorhergehenden Ansprüche, **dadurch gekennzeichnet, daß** die einzelnen Teilstücke (9) und/oder Verbindungsstücke (10) aus biegsamem, flexiblem Material gebildet sowie auf- und abrollbar sind.

7. Kabelkanal nach einem der vorhergehenden Ansprüche, **dadurch gekennzeichnet, daß** die Verbindungsstücke (10) und/oder die Teilstücke (9) aus diffusionshemmendem Material wie Karton, Polystyrol oder PVC gebildet sind.

8. Kabelkanal nach einem der vorhergehenden Ansprüche, **dadurch gekennzeichnet, daß** die einzelnen Teilstücke (9) und/oder die Verbindungsstücke (10) über eine Klebeverbindung (12) aneinander ansetzbar sind.

9. Kabelkanal nach einem der vorhergehenden Ansprüche, **dadurch gekennzeichnet, daß** die einzelnen Teilstücke (9) und/oder Verbindungsstücke (10) eine zusätzliche dampfsperrende Beschichtung aufweisen.

10. Kabelkanal nach einem der vorhergehenden Ansprüche, **dadurch gekennzeichnet, daß** die Klebeverbindung oder der Klebestreifen (12) auf einer der Dichtfläche (11) oder Anlegefläche gegenüberliegenden oder abgewandten Seite (21) angeordnet ist und seitlich über die Dichtfläche (11) hinausragt.

11. Kabelkanal nach einem der vorhergehenden Ansprüche, **dadurch gekennzeichnet, daß** die einzelnen Teilstücke (9) und/oder Verbindungsstücke (10) einen Faltbalg (14) aufweisen und/oder flexibel ausgebildet sind.

12. Kabelkanal nach einem der vorhergehenden Ansprüche, **dadurch gekennzeichnet, daß** die einzelnen Teilstücke (9) und/oder Verbindungsstücke (10) durchstechfest und reißfest ausgebildet sind.

13. Kabelkanal nach einem der vorhergehenden Ansprüche, **dadurch gekennzeichnet, daß** die einzelnen Teilstücke (9) und/oder Verbindungsstücke (10) aus steifem Material wie Preßspan oder Kunststoff gebildet sind.

14. Kabelkanal nach einem der vorhergehenden Ansprüche, **dadurch gekennzeichnet, daß** die Teilstücke (9) und/oder die Verbindungsstücke (10) derart ausgebildet sind, daß eine einschalige Ausbildung der Hohlraumwand (3) möglich ist.

15. Kabelkanal nach einem der vorhergehenden Ansprüche, **dadurch gekennzeichnet, daß** die Klebeverbindung als vorgefertigter Klebestreifen (12, 12') ausgebildet ist.

16. Kabelkanal nach einem der vorhergehenden Ansprüche, **dadurch gekennzeichnet, daß** der Kabelkanal (1) aus flachem, flexiblem, diffusionshemmendem Laminat oder Material gebildet ist und einen oder mehrere Falze (14) oder Faltbalge aufweist, mittels derer das Material zu einem Kabelkanal (1) formbar ist.

17. Kabelkanal (1) aus einem oder mehreren Teilstücken (9) eines diffusionshemmenden, mit Klebestreifen versehenen Materials zum Befestigen und/oder Aufnehmen von Kabel- und/oder Rohrelementen (13) an Wänden (2) von Gebäuden, wobei die Klebefläche (12) des als Ganzes diffusionshemmend ausgebildeten Kabelkanals (1) als Dichtfläche (11) zur Wand oder einer Dampfsperre (17) hin ausgebildet ist, wobei der Kabelkanal (1) über die Klebeverbindung (12) an die Wand (2) oder Dampfsperre oder Dampfbremse (17) oder an das nächste Teilstück (9) anbringbar und fixierbar ist.
